# EUROPEAN PATENT SPECIFICATION

(11) **EP 3 401 939 B1**
(45) Date of publication and mention of the grant of the patent: **06.11.2019**
(21) Application number: 17305543.5
(22) Date of filing: 12.05.2017
(51) Int. Cl.: H01H 9/16, H02J 13/00, H02B 1/18, H02B 1/21

(54) **INSTALLATION APPARATUS, SYSTEM AND METHOD FOR REGULATING VOLTAGE NETWORKS**
INSTALLATIONSVORRICHTUNG, SYSTEM UND VERFAHREN ZUR REGELUNG VON SPANNUNGSNETZEN
APPAREIL D'INSTALLATION, SYSTÈME ET PROCÉDÉ DE RÉGULATION DE RÉSEAUX DE TENSION

(43) Date of publication of application: 14.11.2018
(73) Proprietor: HAGER-ELECTRO SAS, 67210 Obernai (FR)
(72) Inventor: ARNOLD, Urs, 6212 St. Erhard (CH); HOLZGANG, Ernst, 6370 Oberdorf (CH); OTTIGER, Thomas, 6014 Luzern (CH)
(74) Representative: Nuss, Laurent

(56) References cited:
- EP-A1- 2 975 707
- WO-A1-99/19954

## Description

The invention relates to an installation apparatus for installation in standardized switch frameworks in cable distribution cabinets of voltage networks.

Installation apparatuses of the kind mentioned at the outset are known from practice in various configurations.

As a rule, these installation apparatuses involve fuse rails, which are used in switch frameworks dimensioned for all manufacturers, e.g., in cable distribution cabinets on roadsides. In addition, such installation apparatuses are located in switch cabinets of industrial plants, as well as of energy distribution plants. A series of electrical consumers branches off of these installation apparatuses.

For example, these include houses on a road section or even larger machines in a factory hall. In the event of fusing, the houses or machines are separated from the voltage network by the fuse rails.

The voltage networks and in particular the low-voltage networks are nearly to completely nontransparent. This means that the individual local network states, for example within a road network, are not known to the network operators. There are simply no means for acquiring the network states and relaying them to the network operator.

This also posed little problem up until the use of volatile energies, since the flow of electrical energy went exclusively from the power plants to the individual consumers by way of the high-voltage, medium-voltage and low-voltage networks. As a consequence, the network operators essentially had to make sure that the power plants provided an amount of energy corresponding to the average consumption at all times of the day.

However, the use of renewable energies, above all of volatile energy sources, such as wind power and solar power plants, is making energy generation increasingly more decentralized and volatile. Approx. 95% of the supply from renewable generation takes place in Germany and at low- and medium-voltage networks. As a result, current spikes arise at specific times at specific locations in the medium- and low-voltage networks. But there are only limited options for storing these current spikes. However, storing electrical energy is basically not very economical, and thus only makes sense in exceptional cases.

One possible alternative for storing electrical energy involves conventional network expansion, in which the lines, transformers and switchgear are given correspondingly larger dimensions. This makes it possible to relay the current spikes even over larger distances, so that the effects of frequently locally centered current spikes can be at least partially averaged out nationwide.

However, the conventional expansion of voltage networks is very expensive.

A solution is to provide an installation apparatus for installation in standardized switch frameworks located in cable distribution cabinets of voltage networks, in particular low-voltage networks, the installation apparatus comprising a tab base and partial components, wherein the tab base is configured to be connected electrically and mechanically with busbars of cable distribution cabinets, wherein the partial components comprise a communication unit and at least one sensor, wherein the installation apparatus comprises an internal data network.

The term "switch framework" refers to frame-like arrangements, which are located in the cable distribution cabinets. The switch frameworks comprises slots into which the installation apparatuses can be placed. For the sake of simplicity, a manufacturer-spanning standard has been developed with respect to the dimensions of installation apparatuses and switch frameworks.

The term "cable distribution cabinet" must be understood functionally, and refers only to junctions at which the voltage network branches. Such junctions can be cable distribution cabinets on roadsides or in local network stations, or also switch cabinets at industrial plants or also at energy distribution plants.

The word "tab base" denotes an element that is suspended from busbars of cable distribution cabinets by means of busbar adapters. The busbars are fixedly mounted flat bars, which run parallel and horizontally to each other. The center distances of the busbars are standardized, and according to IEC 60269 measure 100 or 185 mm. In addition, there are also works standards that provide busbars with center distances of 60 mm. The busbar adapters are preferably angled, and hook into the horizontally running busbars, thereby simultaneously establishing an electrical and mechanical connection.

The tab base can be a standardized tab base. The term "standardized" refers both to national and international standards, along with DIN standards, EN standards or even ISO standards. However, they also encompass manufacturer-spanning standards, which have established themselves over time, and have not or not yet made their way into DIN, EN or ISO standards. Meant here in particular are the overall widths of the tab bases, which while not defined by DIN, EN or ISO standards, measure 50 mm (fuse size NH00) or 100 mm (fuse size NH1 to NH3) for all manufacturers. The fuse sizes NH00 to NH03 are here assigned to amperages of 160, 250, 400 or 630 A. The overall heights of the tab bases do vary, but several dimensions have here established themselves as well. For example, these are 400 mm for fuse size NH00 or 740 mm for fuse sizes NH1 to NH3.

The installation apparatuses are often integrated into switch frameworks, so that the switch frameworks enclose the installation apparatuses individually or also as a whole. In the case of individual enclosures, the installation apparatuses must thus have dimensions that are less than or equal to the standardized dimensions in terms of overall width and height. As a consequence, the term "standardized" means at least that the tab base according to the invention has dimensions that are less than or especially preferably equal to the respective aforementioned dimensions of the standards.

The term "sensors" refers to components that can be configured to measure one or more different parameters. The parameters can include amperage and/or voltage, but also temperature. In particular when measuring amperage or voltage, the sensors can be simple electrical lines. However, the sensors can also be more complex components, for example which take on the job of measuring the voltage quality or electricity metering. Consequently, terms like power quality interface or smart meters can be construed as sensors. The individual sensors can thus exhibit their own computing units.

However, the sensors can also be interconnected by a shared computing unit. The computing unit or computing units are preferably used to process the obtained measured values.

The computing unit or computing units can represent a data filter, which bundles the measured value data, for example in arithmetically averaged form. The computing unit or computing units can convert the analog values into digital values and/or provide them with a timestamp. The computing unit or computing units can calculate additional values, such as frequencies and power factor, from the respective parameters, e.g., the current amperage and current voltage.

The sensors can be arranged before or after the junction in cable distribution cabinets. The sensors can be situated at any locations desired in the respective cable distribution cabinet. Especially preferred are the busbars, the cables to and from the cable distribution cabinet, the busbar adapters and slots in or on the fuse rails themselves.

Recorded data from the sensor or sensors are then transferred to a communication unit, which transmits the data to a centralized and/or decentralized higher-level control center. The type of transmission can be any of the conventional communication technologies (Broadband over PowerLine Communication (BPL) or PowerLine Communication (PLC) or PowerLAN, radio, RF-Mesh, satellite broadcasting, optical fibers, Global System for Mobile Communication (GSM), Long Term Evolution (LTE), terrestrial trunked radio, Digital Subscriber Line (DSL), Universal Mobile Telecommunications System (UMTS), etc.) . The communication protocol IP and usual SmartGrid protection profiles are preferably used. In the case of PowerLine Communication, the information is routed directly over the voltage networks. In particular, a combination of radio and PowerLine Communication is possible. For example, cable distribution cabinets and local network stations can communicate via PowerLine Communication, whereas the local network stations exchange the data with the higher-level control center by radio. Other combinations of the communication technologies mentioned at the outset are here possible.

The term "data network" means that the partial components of the installation apparatuses are connected with each other via the data network for communication purposes. The data network is internal, and hence limited to the communication from the partial components inside of the installation apparatus in the cable distribution cabinet.

According to a preferred embodiment, the data network is also adaptive, so that additional partial components can expand the data network inside of the cable distribution cabinet at any time. In particular, the data network is adaptive in the sense that it is automatically expanded by merely physically adding more partial components. Adaptive is preferably to be understood in the sense of Plug & Play. It is especially preferable that the data network be adaptive in the sense of avoiding an initialization or installation step on the software level.

The data network can be a data bus or also a wireless network. The data bus is preferably expanded by merely plugging in corresponding connectors of the partial components. The data bus is preferably integrated into the tab base, and offers plug-in locations distributed over the tab base, so that merely plugging in correspondingly shorter cables of the partial components automatically expands the data network. The data bus advantageously corresponds to a ribbon cable with insulation-displacement connectors. The installation apparatus can preferably also be expanded to two or more tab bases. Possible wireless networks include Bluetooth or also WLAN, ZigBee or the like. In one embodiment, the data network uses PowerLine Communication, i.e., communication over power lines with the network protocol language IP. The usual data communication protocols and security protocols are preferably used here as well.

It is known from prior art and for instance from document EP 2 975 707 A1 that the tab base is fastened and installed ex works in a free slot of a switch framework. The whole cable distribution cabinet comprising the switch frameworks is then installed in a low voltage network, located between power plants and individual consumers.

However, the different elements comprised in the tab base are rather expensive. In particular, the partial components, the communication unit, the sensors, etc, are high-value elements. Moreover, the tab base is used on a short time window that occurs only a few times during the year, especially when consumption statistics are done, in order to evaluate the flow of electrical energy needed and produced by the individual consumers.

Document WO 99/19954 discloses an installation apparatus according to the preamble of claim 1.

The aim of the present invention is to reduce the price of all the cable distribution cabinets dispersed in the low voltage network of a given territory.

To this end, the tab base of the invention, according to claim 1, comprises:
a docking station configured to be fixedly mounted in a free slot of the framework;
an electronic module removably mounted in the docking station.

The main idea is to provide each cable distribution cabinet with a docking station mounted thereto ex works. This docking station is composed of uncostly basic elements, whereas all the expensive elements are held in the electronic module. There is only one electronic module for all the cable distribution cabinets of the given territory. This electronic module is movable from a cable distribution cabinet to another. As a result, the total price of all the cable distribution cabinets is highly decreased.

Whenever it is necessary to do consumption statistics, the electrician takes the electronic module with him, and plugs it into the docking station of the cable distribution cabinet where the measures take place. The electrician can pass from a cable distribution cabinet to another by simply removing and plugging the electronic module.

Advantageously, the docking station comprises a fixing support for the electrical and mechanical connection with the busbars and a protecting subassembly for ensuring electrical protection of the electronic module against overcurrent and fault-current.

Said protecting subassembly is provided with a current transformer. The current transformer converts the voltage from one or more of the busbars into an operating voltage for the partial components, so that the latter are correspondingly supplied. The current transformer can be a feed-in transformer, which is situated in the area of the busbar adapters. The current transformer can also be a block transformer, which converts the voltages of all three phases, for example the foot of the tag base.

Said protecting subassembly is provided with an overcurrent protection device and/or a fault-current circuit breaker.

The overcurrent protection device is used to protect the partial components against excessively high currents. The overcurrent protection device can be designed as a fuse or circuit breaker. It is further preferable that the overcurrent protection device be switchable. In an especially preferred embodiment, the overvoltage protection device comprises an electronic fuse monitor, which in the event of a fuse response by the overvoltage protection device sends corresponding information to the computing unit and/or control center.

The fault-current circuit breaker is used to protect the specialized personnel against fault currents. The fault-current circuit breaker is preferably used in combination with the overcurrent protection device. The fault-current circuit breaker advantageously has an electronic fuse monitor. In the event of a fault current, the electronic fuse monitor sends a corresponding signal to the computing unit and/or communication unit and/or control center.

In a preferred embodiment, the electronic module is electrically connected to the docking station through a connector.

The electronic module is mechanically connected to the docking station through a mechanical system comprising for example a clip and/or a guiding element and/or a clamp and/or screw.

Advantageously, the electronic module is electrically and mechanically connected in one operation, and also removed in one operation.

The electronic module comprises a receptacle for modularly accommodating the partial components. The receptacle is preferably a top-hat rail, which especially preferably corresponds to standard DIN EN 60715. The top hat rail further preferably comprises edge lengths of 35 x 7.5 mm, as described in standard DIN EN 60715. The term "modular accommodation" means that the partial components can be especially easily fastened to the receptacle and then be removed again as well. In particular, the partial components can be fastened to the receptacle just by latching.

An uninterruptible power supply is preferably provided as a partial component. The uninterruptible power supply is used to supply the partial components in the event of a power failure, so that especially important information can be transmitted to the control center during the power failure.

The power supply preferably comprises an accumulator, a transformer, a switching relay, a logic and a communication port.

An analog-to-digital converter is preferably provided as a partial component. The analog-to-digital converter converts analog values of the sensors into digital values. The digital values can be made available to the computing unit or communication unit. In particular, the analog-to-digital converter is an inline-controller.

An electricity meter interface is preferably provided as a partial component. In particular, the term "electricity meter" here also encompasses so-called smart meters. The electricity meter interface can be connected with one or more corresponding electricity meters. It is best for the electricity meters to be arranged in the cable distribution cabinet. The electricity meters are advantageously connected with the cables leading away from the cable distribution cabinet. Cables leading away from the cable distribution cabinets are those that further branch the voltage network. In a preferred embodiment, the electricity meters are located under the fuse rails. The electricity meters are advantageously connected with street cables.

An actuator is advantageously provided as a partial component. The actuator is an element that actuates feeders and/or consumers. The actuator is preferably a coupling relay, with which inverters of photovoltaic plants can be hooked up to the voltage network and separated from the latter, for example. The actuator is preferably an actuatable charging interface, for example for electric vehicles. The actuators are output elements, with which the control center or installation apparatus can exert influence on the local electricity supply or local electricity demand.

The communication unit preferably comprises an IP address.

As a result, the communication unit can be addressed according to the internationally very common IP standard.

It is especially preferred that the communication unit be IPsec-capable for communication with the control center or understand the usual and required protection profiles, which affords a certain measure of security when it comes to information technology. The communication unit is preferably a network switch in the form of a hub/modem/switches. It is further preferred that one or more of the partial components exhibit IP addresses.

It lies within the framework of the invention that the sensor can be modularly attached to the electronic module. The term "modular" here means that the sensor can be especially easily attached to the electronic module. In particular, it means that the sensor is joined with the electronic module just by insertion, and that then no further initialization or installation steps are required. The sensor and electronic module are preferably Plug&Play capable. In another embodiment, the sensors can also be wirelessly linked to the electronic module via the adaptive data network.

In a preferred embodiment, the electronic module comprises an electrical line for supplying power to the partial components.

The electrical line provides connections in the form of standardized sockets and/or plugs. In an advantageous embodiment, the partial components exhibit plugs, which are automatically connected with sockets of the electrical line while the partial components latch into the preassembled receptacle. In a preferred embodiment, the preassembled receptacle acts as the ground potential. The integrated electrical line advantageously carries the potential of the operating voltage.

The electronic module comprises at least one area to connect a central processing unit (CPU). Preferably, the electronic modules comprises a plurality of areas to connect a plurality of central processing units.

The electronic module comprises at least one connector to connect sensor of the Rogowski coil type. Preferably, the electronic module comprises a plurality of connectors to connect all kinds of sensors.

It lies within the framework of the invention that the preassembled receptacle is part of the data network. The partial components preferably communicate via PowerLine Communication over the preassembled receptacle. In an embodiment, adapters tap the PowerLine Communication modulations from the preassembled receptacle, and make the data obtained from the PowerLine Communication modulations available to standardized connections of the adapters.

Standardized connections can be USB or Ethernet connections, for example. In another embodiment, the partial components exhibit adapters, which tap the PowerLine Communication modulations from the preassembled receptacle, and thereby make them available to the partial components. In this way, the preassembled receptacle can be used to establish a connection of the partial components from both a mechanical and information technology standpoint merely by latching.

The invention also teaches about a system for intelligently distributing electrical energy, with at least one installation apparatus according to the invention and a control center. The control center receives information about the network states at the individual cable distribution cabinets from the communication units of the installation apparatuses.

As a result, the network states are acquired with a relatively high spatial resolution. In particular, voltage band violations or overload currents are detected, which can potentially be offset via corresponding control actions from the control center and/or from the individual installation apparatus. The data collected by the control center or control centers can be used to further synchronize the latter with weather data, traffic data, tariff models and the like. For example, by evaluating weather data for regionally limited regions, the control center can signal to consumers, e.g., via a so-called StromAmpel indicator, that power consumption is to be increased or decreased.

The invention also teaches about a method for distributing electrical energy, with at least one installation apparatus according to the invention, wherein the installation apparatus is built into a switch framework of a cable distributions cabinet of voltage networks, wherein the sensor built into the installation apparatus performs measurements, wherein the communication unit built into the installation apparatus relays the measured values to a control center, wherein the installation apparatus and/or control center evaluates the measured values, wherein the measured values are used to control the energy flows in the voltage networks, so as to avoid value range violations, for example voltage or overload current violations.

The invention is based upon the knowledge that the installation apparatus according to the invention, the system according to the invention and the method according to the invention increase the transparency in particular of medium- and low-voltage networks, and the modularity principle keeps the outlay required for this purpose as low as possible. The installation apparatus first makes it especially easy to install the electrical module in cable distribution cabinets, thanks to the docking station correspondingly dimensioned especially for this purpose. If desired, various partial components can be especially easily integrated into the electronic module and parametrized for the respective network circumstances. In a preferred embodiment, the partial components are fastened to the electrical module just by latching, and thereby simultaneously connected with the latter in terms of information technology, without there having to be any further installation requirements.

Assembly is easy and entails little cabling work, which also improves the safety of specialized personnel. Finally, the electronic module can be retrofitted at any time without any major outlay thanks to the modularity principle. As a consequence, the invention represents an inexpensive alternative to conventional network expansion.

The invention will be explained in more detail below based on a drawing that depicts just a single exemplary embodiment. Schematically shown on:
Fig. 1 is a system according to the invention for controlling medium- and low-voltage networks,
Fig. 2 is a cable distribution cabinet of the system from Fig. 1 that reflects prior art,
Fig. 3 is an exploded view of an installation apparatus according to the invention for installation in the cable distribution cabinet from Fig. 2;
Fig. 4 is a perspective view of the assembled installation apparatus according to Fig. 3;
Fig. 5 presents a front view and simplified block diagram of an example of embodiment of the installation apparatus.

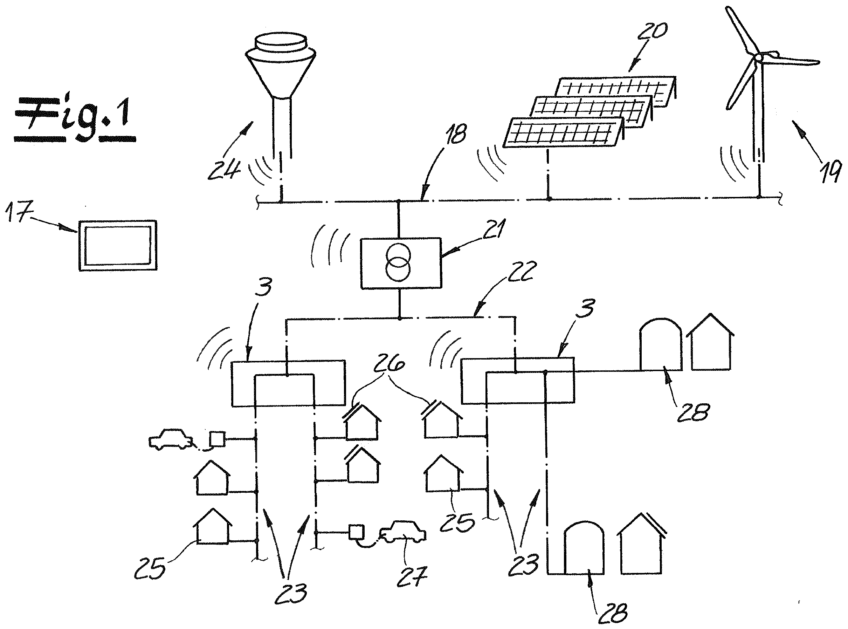

Fig. 1 shows a medium-voltage network 18 and a low-voltage network 22, which are connected with each other by a local network station 21 with transformer. The two networks 18, 22 exhibit both feeders and consumers. For example, the medium-voltage network 18 has a wind power plant 19, a solar power plant 20 in the form of a solar park, as well as a water tower 24, which through its pump acts as an energy storage system.

Cable distribution cabinets 3 divide the low-voltage network 22 into individual road network cables 23. In turn, the road network cables 23 each separately comprise a series of pure consumers 25, 27, and consumers 26 with a volatile feed. The low-voltage network 22 can also exhibit controllable feeders 28, which at readily determinable times can feed power into the low-voltage network 22.

Biogas plants represent an example for controllable feeders 28.

The system according to the invention shown on Fig. 1 comprises cable distribution cabinets 3, local network stations 21 and larger, volatile feeders 19,20, which are able to acquire network states and transmit them to a control center, e.g., by radio (as symbolized) . In this way, the nontransparent low-voltage network 22 and the at best partially transparent medium-voltage network become more transparent in the sense that the control center 17 now can acquire and process network states with a higher spatial resolution. The control center 17 harmonizes the volatile electricity supplies with the volatile electricity demands or the predictable or controllable electricity demands and electricity supplies. Given very strong current spikes in the medium-voltage network 18, for example on sunny and windy Sundays, water towers 24 can at least partially capture and temporarily store the current spikes in response to a command from the control center 17.

Only if the network states are also known at the level of the individual road network cables 2 of the low-voltage network 22 can individual current spikes still be offset inside a network of a cable distribution cabinet 3, 21, i.e., in a decentralized manner. As a consequence, the currents are carried in a decentralized and intelligent manner, thereby unburdening central lines. Finally, intelligent current conduction thus represents an alternative to conventional network expansion with larger dimensioned lines and components.

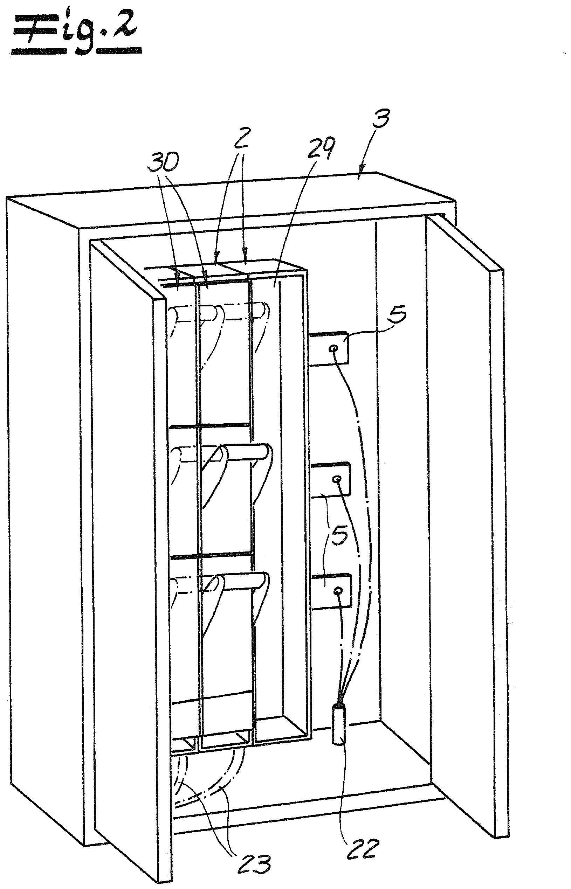

Fig. 2 shows a typical cable distribution cabinet 3 according to prior art. A cable of the low-voltage network 22 leading to the local network station 21 is connected with three busbars 5, which each carry a phase (LI, L2 or L3). Angular busbar adapters are used to hang fuse rails 30 on the busbars 5. In addition to the electrical connection, the busbar adapters also establish the electrical connection between the fuse rails 30 and busbars 5. A cable 23 branches from each fuse rail 30, and supplies the respective road network cable 23. The fuse rails 30 are located in switch frameworks 2, which frame the fuse rails 30. The switch framework 2 also comprises a free slot 29, which has the usual dimensions set forth in the standard for all manufacturers. This free slot 29 previously served as a reserve slot, but is now occupied by the installation apparatus 1 according to the invention.

The installation apparatus 1 initially comprises a tab base 4, and further comprises partial components arranged into the cable distribution cabinet 3 and into the tab base 4.

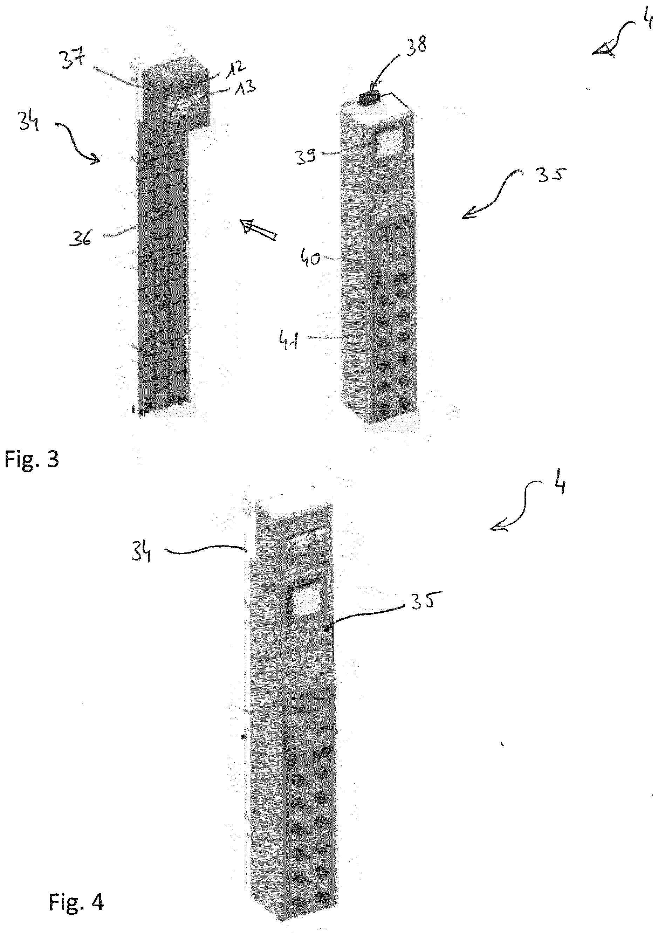

Fig. 3 and 4 disclose a tab base 4 that is mounted into the free slot 29.

This tab base 4 is composed of:
- a docking station 34 fixedly mounted in the free framework 2;
- an electronic module 35 removably mounted in the docking station 34.

The docking station 34 comprises a fixing support 36 for the electrical and mechanical connection with the busbars 5 and a protecting subassembly 37 for ensuring electrical protection of the electronic module 35 against overcurrent and fault-current.

More precisely, the fixing support 36 comprises busbar adapters situated on the rear side, and thus can be readily hung on the busbars 5 of the cable distribution cabinet 3.

This docking station 34 also corresponds to the manufacturer-spanning standard relating to dimensions, so that it can be smoothly placed in the free slot 29 of the switch framework 2 of the cable distribution cabinet 3.

The protecting subassembly 37 of the docking station 34 is provided with a current transformer 10 that will be described later.

The protecting subassembly 37 of the docking station 34 is provided with an overcurrent protection device 12 and a fault-current circuit breaker 13 that will be described later.

The electronic module 35 is easily removable from the docking station 34. It and can be mounted on the docking station 34 in one operation, and removed in also one operation.

A male connector 38 is provided on the upper surface of the electronic module 35, and is inserted into a corresponding female connector provided in the lower surface of the protecting subassembly 37, in order to perform the electrical connection between them.

The electronic module 35 is mechanically connected to the docking station 34 through a mechanical system. Many kinds of mechanical system can be used. For example, the mechanical system can comprise a guiding element for guiding and centering the electronic module 35 into the docking station 34, and a clip for fixing the electronic module 35 to the docking station 34. Or there can be a clamping mechanism, or there can be screws, etc.

The electronic module 35 is advantageously provided with a power socket 39, in case the installer needs to operate any device.

The electronic module 35 is preferably divided into two parts; a first part 40 corresponding to a control panel, and a second part 41 corresponding to a sensor interface provided with several connectors.

The electronic module 35 can comprise for example:
- a LAN interface
- a WAN interface
- a 3G interface
- a Bluetooth interface
- a temperature sensor
- a humidity sensor
- a current sensor, like a Rogowski coil
- an in/out interface
- etc.

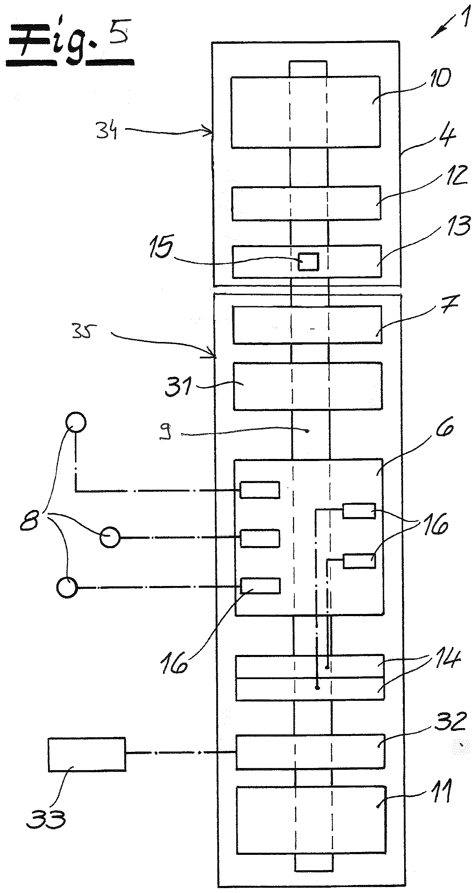

Fig. 5 presents a front view and simplified block diagram of a possible embodiment of the installation apparatus 1 according to the invention.

The installation apparatus 1 initially comprises a tab base 4, which is divided into a docking station 34 and an electronic module 35.

The docking station 34 comprises a current transformer 10 in the form of a feed-in transformer. The feed-in transformer taps the current from the corresponding busbar 5 in the area of a busbar adapter, and converts the voltage from 230 volts of alternating voltage, e.g., down to 24 volts of direct voltage. The 24 volt potential serves as operating voltage for the partial components connected to the installation apparatus 1. The operating voltage potential is carried on an electrical line integrated into the tab base 4.

For safety purposes, the docking station 34 also has arranged on it an overcurrent protection device 12, which protects the partial components against corresponding overcurrent. A fault-current circuit breaker 13 serves to protect the specialized personnel, who installs and services the installation apparatuses. The fault-current circuit breaker 13 integrates an electronic fuse monitor 15, which is activated right after a response by the fuse of the fault-current circuit breaker 13, and sends a signal to a control center 17. In the event of disruptions, the control center is as a result notified about the disruption in real time and with precise localization. While a communication unit 7 (described later) is also able to report faults, redundancy does make sense in the case of fault messages.

A top-hat rail 9 according to DIN EN 60715 with the edge dimensions 35 x 7.5 mm runs along the front side of the electronic module 35, so that partial components can be fastened to the electronic module 35.

The electronic module 35 comprises a computing unit 6, a communication unit 7 along with one or more sensors 8. The sensors 8 in the form of electrical lines are arranged on the cables 22, 23, on the busbars 5 or on the fuse rails 30, for example, and acquire currents or voltages. The sensors 8 are connected with the installation apparatus 1 with digitizing measuring cards in plug-in locations 16 of the computing unit 6. The computing unit 6 is designed as a Power Quality Interface, and solves numerous measuring tasks in electrical networks according to network quality standards. Linkage takes place via the communication protocol IEC 61850 and via a TCP-IP interface with a connection to the communication unit 7. The data of the sensors 8 are filtered through the computer unit 6 and preprocessed, and finally transmitted to the communication unit 7 by means of a data bus integrated into the tab base 4. Alternatively, the raw data of the sensors 8 can also be digitized by an analog-to-digital converter 31, and then relayed to the communication unit 7. The data bus is adaptive, i.e., can be expanded by additional partial components at any time via a simple plug connection. This data bus is designed as a ribbon cable with insulation displacement connectors.

The communication unit 7 sends the preprocessed data to the control center 17. Data transmission between the communication unit 7 and control center 17 takes place via satellite broadcasting. To this end, the communication unit 7 receives an IP address, through which the control center 17 and communication unit 7 can communicate with each other via the standardized IPSec protocol.

Provided on the electronic module 35 is an uninterruptible power supply 11, which ensures the continued operation of the installation apparatus 1 in the event of a power failure, and in so doing can transmit valuable information to the control center 17 precisely during the downtime. The uninterruptible power supply 11 is equipped in a known manner with an accumulator, a transformer, a switching relay, as well as a corresponding logic.

The electronic fuse monitor 15, previously described, is designed to provide a potential-free contact notification. This signal is relayed to an analog-to-digital converter 31. The connection between the communication unit 7 and analog-to-digital converter 31 also makes the electronic fuse monitor 15 remotely readable.

An electricity meter interface 32 is also provided on the electronic module 35. The electricity meter interface permits a connection with an electricity meter 33, which meters the electricity of the road network cables 23 or electricity to house connections.

Finally, the electronic module 35 comprises actuators 14 in the form of coupling relays. The coupling relays galvanically separate the circuits of the busbars 5 from those of inverters, for example, which are connected with photovoltaic systems of the houses. For example, switching the coupling relays makes it possible to hook up the photovoltaic systems to the low-voltage network 22 or separate them from the latter. As a consequence, the coupling relays afford optional ways for adjusting the electricity supply to electricity demand. The coupling relays are connected with the computing unit 6, as are the sensors 8. The charging interfaces are connected with corresponding outlets of parking spaces or garages.

## Claims

1. An installation apparatus (1) for installation in switch frameworks (2) located in cable distribution cabinets (3) of voltage networks (18, 22), in. particular of low-voltage networks (22), the installation apparatus (1) comprising a tab base (4) as well as partial components, wherein the tab base (4) is configured to be connected electrically and mechanically with busbars (5) of cable distribution cabinets (3), wherein the partial components comprise a communication unit (7) and at least one sensor (8), wherein the installation apparatus (1) comprises an internal data network, said tab base (4) comprises :
- a docking station (34) configured to be fixedly mounted in a free slot (29) of the framework (2) and comprising a fixing support (36) for the electrical and mechanical connection with the busbars (5),
- an electronic module (35) removably mounted in the docking station (34) comprising at least one connector,
said installation apparatus being **characterized in that**
the docking station (34) comprises a protecting subassembly (37) for ensuring electrical protection of the electronic module (35) against overcurrent and fault-current,
wherein the at least one connector is suitable for connecting a current sensor, preferably of the Rogowski coil type.

2. The installation apparatus (1) according to the previous claim, wherein said protecting subassembly (37) is provided with a current transformer (10).

3. The installation apparatus (1) according to one of claims 1 to 2, wherein said protecting subassembly (37) is provided with an overcurrent protection device (12) and/or a fault-current circuit breaker (13).

4. The installation apparatus (1) according to one of claims 1 to 3, wherein said electronic module (35) is electrically connected to the docking station (34) through a connector (38).

5. The installation apparatus (1) according to one of claims 1 to 4, wherein said electronic module (35) is mechanically connected to the docking station (34) through a mechanical system comprising for example a clip and/or a guiding element and/or a clamp and/or screw.

6. The installation apparatus (1) according to one of claims 1 to 5, wherein the electronic module (35) comprises a receptacle (9) for modularly accommodating said partial components.

7. The installation apparatus (1) according to one of claims 1 to 6, wherein an uninterruptible power supply (11) is provided as a partial component.

8. The installation apparatus (1) according to one of claims 1 to 7, wherein an analog-to-digital converter (31) is provided as a partial component.

9. The installation apparatus (1) according to one of claims 1 to 8, wherein an electricity meter interface (32) is provided as a partial component.

10. The installation apparatus (1) according to one of claims 1 to 9, wherein an actuator (14) is provided as a partial component.

11. The installation apparatus (1) according to one of claims 1 to 10, wherein the communication unit (7) comprises an IP address, and preferably is IPsec capable.

12. The installation apparatus (1) according to one of claims 1 to 11, wherein the sensor (8), preferably at least one additional sensor (8), and especially preferably at least one actuator (14) can be modularly attached to the installation apparatus (1).

13. The installation apparatus (1) according to one of claims 1 to 12, wherein the electronic module (35) comprises an electrical line for supplying power to the partial components.

14. The installation apparatus (1) according to one of claims 1 to 13, wherein the electronic module (35) comprises at least one area to connect a central processing unit.

15. The installation apparatus (1) according to one of claims 6 to 14, wherein the preassembled receptacle (9) is part of the data network.

16. A system for distributing electrical energy, with at least one installation apparatus (1) according to one of claims 1 to 15 and a control center (17).

17. A method for distributing electrical energy, with at least one installation apparatus (1) according to one of claims 1 to 15,
wherein the installation apparatus (1) is built into a switch framework (2) of a cable distribution cabinet (3) of voltage networks,
wherein the sensor (8) built into the installation apparatus (1) performs measurements,
wherein the communication unit (7) built into the installation apparatus (1) relays the measured values to a control center (17),
wherein the installation apparatus (1) and/or control center (17) evaluates the measured values,
wherein the measured values are used to control the energy flows in the voltage networks,
so as to avoid value range violations, for example voltage or overload current violations.

## Patentansprüche

1. Installationsvorrichtung (1) zum Einbau in Schaltanlagen (2), die sich in Kabelverteilerschränken (3) von Spannungsnetzen (18, 22), insbesondere von Niederspannungsnetzen (22), befinden,
wobei die Installationsvorrichtung (1) eine Registerbasis (4) sowie Teilkomponenten umfasst, wobei die Registerbasis (4) konfiguriert ist, um elektrisch und mechanisch mit Sammelschienen (5) von Kabelverteilerschränken (3) verbunden zu werden,
wobei die Teilkomponenten eine Kommunikationseinheit (7) und mindestens einen Sensor (8) umfassen,
wobei die Installationsvorrichtung (1) ein internes Datennetzwerk umfasst, wobei die Registerbasis (4) umfasst:
- eine Dockingstation (34), die konfiguriert ist, um fest in einem freien Schlitz (29) der Anlage (2) montiert zu werden, und die eine Befestigungsstütze (36) für die elektrische und mechanische Verbindung mit den Sammelschienen (5) umfasst,
- ein elektronisches Modul (35), das abnehmbar in der Dockingstation (34) montiert ist und mindestens einen Verbinder umfasst,
wobei die Installationsvorrichtung **dadurch gekennzeichnet ist, dass**
die Dockingstation (34) eine Schutzunterbaugruppe (37) zum Sicherstellen eines elektrischen Schutzes des elektronischen Moduls (35) gegen Überstrom und Fehlerstrom umfasst,
wobei der mindestens eine Verbinder zum Anschluss eines Stromsensors, vorzugsweise vom Rogowski-Spulentyp, geeignet ist.

2. Die Installationsvorrichtung (1) nach dem vorherigen Anspruch,
wobei die Schutzunterbaugruppe (37) mit einem Stromwandler (10) versehen ist.

3. Die Installationsvorrichtung (1) nach einem der Ansprüche 1 bis 2,
wobei die Schutzunterbaugruppe (37) mit einer Überstromschutzvorrichtung (12) und/oder einem Fehlerstromschutzschalter (13) versehen ist.

4. Die Installationsvorrichtung (1) nach einem der Ansprüche 1 bis 3,
wobei das elektronische Modul (35) über einen Verbinder (38) elektrisch mit der Dockingstation (34) verbunden ist.

5. Die Installationsvorrichtung (1) nach einem der Ansprüche 1 bis 4,
wobei das elektronische Modul (35) mechanisch mit der Dockingstation (34) über ein mechanisches System verbunden ist, das beispielsweise einen Clip und/oder ein Führungselement und/oder eine Klemme und/oder Schraube umfasst.

6. Installationsvorrichtung (1) nach einem der Ansprüche 1 bis 5,
wobei das elektronische Modul (35) eine Aufnahme (9) zur modularen Aufnahme der Teilkomponenten umfasst.

7. Installationsvorrichtung (1) nach einem der Ansprüche 1 bis 6,
wobei als Teilkomponente eine unterbrechungsfreie Stromversorgung (11) vorgesehen ist.

8. Installationsvorrichtung (1) nach einem der Ansprüche 1 bis 7,
wobei ein Analog-Digital-Wandler (31) als Teilkomponente vorgesehen ist.

9. Installationsvorrichtung (1) nach einem der Ansprüche 1 bis 8,
wobei eine Stromzähler-Schnittstelle (32) als Teilkomponente vorgesehen ist.

10. Installationsvorrichtung (1) nach einem der Ansprüche 1 bis 9,
wobei ein Stellglied (14) als Teilkomponente vorgesehen ist.

11. Die Installationsvorrichtung (1) nach einem der Ansprüche 1 bis 10,
wobei die Kommunikationseinheit (7) eine IP-Adresse umfasst und vorzugsweise IPsecfähig ist.

12. Die Installationsvorrichtung (1) nach einem der Ansprüche 1 bis 11,
wobei der Sensor (8), vorzugsweise mindestens ein zusätzlicher Sensor (8), und insbesondere mindestens ein Stellglied (14) modular an der Installationsvorrichtung (1) befestigt werden kann.

13. Die Installationsvorrichtung (1) nach einem der Ansprüche 1 bis 12,
wobei das elektronische Modul (35) eine elektrische Leitung zur Stromversorgung der Teilkomponenten umfasst.

14. Die Installationsvorrichtung (1) nach einem der Ansprüche 1 bis 13,
wobei das elektronische Modul (35) mindestens einen Bereich zum Verbinden einer zentralen Verarbeitungseinheit umfasst.

15. Die Installationsvorrichtung (1) nach einem der Ansprüche 6 bis 14,
wobei die vormontierte Aufnahme (9) Teil des Datennetzes ist.

16. Ein System zur Verteilung elektrischer Energie,
mit mindestens einer Installationsvorrichtung (1) nach einem der Ansprüche 1 bis 15 und einer Leitstelle (17).

17. Verfahren zur Verteilung elektrischer Energie mit mindestens einer Installationsvorrichtung (1) nach einem der Ansprüche 1 bis 15,
wobei die Installationsvorrichtung (1) in eine Schaltanlage (2) eines Kabelverteilerschranks (3) von Spannungsnetzen eingebaut ist,
wobei der in die Installationsvorrichtung (1) eingebaute Sensor (8) Messungen durchführt,
wobei die in die Installationsvorrichtung (1) eingebaute Kommunikationseinheit (7) die Messwerte an eine Leitstelle (17) weiterleitet,
wobei die Installationsvorrichtung (1) und/oder die Leitstelle (17) die Messwerte auswertet, wobei die Messwerte zum Steuern der Energieflüsse in den Spannungsnetzen verwendet werden, um Wertebereichsverletzungen, zum Beispiel Spannungs- oder Überlaststromverletzungen, zu vermeiden.

## Revendications

1. Appareil d'installation (1) pour l'installation dans des structures de commutateur (2) situées dans des armoires de distribution de câble (3) de réseaux de tension (18, 22), en particulier de réseaux basse tension (22), l'appareil d'installation (1) comprenant une base de languette (4) ainsi que des composants partiels, dans lequel la base de languette (4) est configurée pour être raccordée électriquement et mécaniquement à des barres omnibus (5) d'armoires de distribution de câble (3), dans lequel les composants partiels comprennent une unité de communication (7) et au moins un capteur (8), dans lequel l'appareil d'installation (1) comprend un réseau de données interne, ladite base de languette (4) comprend :
- une station d'accueil (34) configurée pour être montée à demeure dans une fente libre (29) de la structure (2) et comprenant un support de fixation (36) pour la connexion électrique et mécanique aux barres omnibus (5),
- un module électronique (35) monté de manière amovible dans la station d'acueil (34) comprenant au moins un connecteur,
ledit appareil d'installation étant **caractérisé en ce que**
la station d'accueil (34) comprend un sous-ensemble de protection (37) pour assurer une protection électrique du module électronique (35) contre une surintensité et un courant de défaut,
dans lequel le ou les connecteurs sont appropriés pour raccorder un capteur de courant, de préférence du type bobine de Rogowski.

2. Appareil d'installation (1) selon la revendication précédente, dans lequel ledit sous-ensemble de protection (37) est pourvu d'un transformateur de courant (10).

3. Appareil d'installation (1) selon l'une des revendications 1 à 2, dans lequel ledit sous-ensemble de protection (37) est pourvu d'un dispositif de protection contre les surintensités (12) et/ou d'un disjoncteur à courant de défaut (13).

4. Appareil d'installation (1) selon l'une des revendications 1 à 3, dans lequel ledit module électronique (35) est raccordé électriquement à la station d'accueil (34) au moyen d'un connecteur (38).

5. Appareil d'installation (1) selon l'une des revendications 1 à 4, dans lequel ledit module électronique (35) est raccordé mécaniquement à la station d'acueil (34) au moyen d'un système mécanique comprenant, par exemple une bride et/ou un élément de guidage et/ou un collier et/ou une vis.

6. Appareil d'installation (1) selon l'une des revendications 1 à 5, dans lequel le module électronique (35) comprend un compartiment (9) pour recevoir de manière modulaire lesdits composants partiels.

7. Appareil d'installation (1) selon l'une des revendications 1 à 6, dans lequel une alimentation électrique sans coupure (11) est fournie sous la forme d'un composant partiel.

8. Appareil d'installation (1) selon l'une des revendications 1 à 7, dans lequel un convertisseur analogique-numérique (31) est fourni sous la forme d'un composant partiel.

9. Appareil d'installation (1) selon l'une des revendications 1 à 8, dans lequel une interface de compteur d'électricité (32) est fourni sous la forme d'un composant partiel.

10. Appareil d'installation (1) selon l'une des revendications 1 à 9, dans lequel un actionneur (14) est fourni sous la forme d'un composant partiel.

11. Appareil d'installation (1) selon l'une des revendications 1 à 10, dans lequel l'unité de communication (7) comprend une adresse IP et, de préférence, est capable d'IPsec.

12. Appareil d'installation (1) selon l'une des revendications 1 à 11, dans lequel le capteur (8), de préférence au moins un capteur supplémentaire (8) et spécialement, de préférence, au moins un actionneur (14) peuvent être fixés de manière modulaire à l'appareil d'installation (1).

13. Appareil d'installation (1) selon l'une des revendications 1 à 12, dans lequel le module électronique (35) comprend une ligne électrique pour fournir de l'énergie aux composants partiels.

14. Appareil d'installation (1) selon l'une des revendications 1 à 13, dans lequel le module électronique (35) comprend au moins une zone pour raccorder une unité centrale de traitement.

15. Appareil d'installation (1) selon l'une des revendications 6 à 14, dans lequel le compartiment préassemblé (9) fait partie du réseau de données.

16. Système pour distribuer de l'énergie électrique, avec au moins un appareil d'installation (1) selon l'une des revendications 1 à 15, et un centre de commande (17).

17. Procédé pour distribuer de l'énergie électrique, avec au moins un appareil d'installation (1) selon l'une des revendications 1 à 15,
dans lequel l'appareil d'installation (1) est intégré dans une structure de commutateur (2) d'une armoire de distribution de câble (3) de réseaux de tension,
dans lequel le capteur (8) intégré dans l'appareil d'installation (1) effectue des mesures,
dans lequel l'unité de communication (7) intégrée dans l'appareil d'installation (1) relaie les valeurs mesurées vers un centre de commande (17),
dans lequel l'appareil d'installation (1) et/ou le centre de commande (17) évaluent les valeurs mesurées,
dans lequel les valeurs mesurées sont utilisées pour réguler les flux d'énergie dans les réseaux de tension,
de sorte à éviter des violations de plage de valeurs, par exemple des violations de tension ou de courant de surcharge.
